# EUROPÄISCHE PATENTSCHRIFT

(11) **EP 0 751 466 B1**
(45) Veröffentlichungstag und Bekanntmachung des Hinweises auf die Patenterteilung: **05.02.2003**
(21) Anmeldenummer: 96109754.0
(22) Anmeldetag: 17.06.1996
(51) Int. Cl.: G06F 15/173, G06F 12/08

(54) **Multiprozessorsystem mit einer sehr grossen Anzahl von Mikroprozessoren**
Multiprocessor system with a very large number of microprocessors
Système multiprocesseur avec un très grand nombre de microprocesseurs

(30) Priorität: 30.06.1995 DE 19524023
(43) Veröffentlichungstag der Anmeldung: 02.01.1997
(73) Patentinhaber: Fujitsu Siemens Computers GmbH, 81739 München (DE)
(72) Erfinder: Sachs, Harald, 85649 Brunnthal (DE); Kock, Jürgen, 85667 Grafing (DE)
(74) Vertreter: Epping, Wilhelm, Dipl.-Ing.

(56) Entgegenhaltungen:
- EP-A- 0 587 918
- EP-A- 0 603 801
- US-A- 5 249 283
- LENOSKI D ET AL: "THE STANFORD DASH MULTIPROCESSOR" COMPUTER, Bd. 25, Nr. 3, 1.März 1992, Seiten 63-79, XP000288291
- FEITOSA R Q: "CACHEKOHARENZ-PROBLEM BEI GROSSEN MULTIPROZESSOREN FUR NUMERISCHE ANWENDUNGEN: EIN NEUER LOSUNGSVORSCHLAG" ANGEWANDTE INFORMATIK. APPLIED INFORMATICS, Bd. 31, Nr. 11/12, 1.November 1989, Seiten 532-541, XP000099627

## Beschreibung

Die Erfindung betrifft ein Multiprozessorsystem mit einer sehr großen Anzahl von Mikroprozessoren.

Da serielle Hochleistungsbusse, auf denen digitale Daten mit einer Geschwindigkeit von 2,4 Gbit/s übertragen werden können, nur sehr kurz sein können, ist es sehr schwierig, etwa 100 oder mehr Mikroprozessoren an sie anzuschließen.

Vernünftigerweise kann ein auf einem heutigen parallelen Hochleistungsbus basierender Prozessor-Cluster etwa 10 Mikroprozessoren ohne große Leistungseinbußen unterstützen.

Ein Problem bei Multiprozessorsystemen ist die Aufrechterhaltung von Cache-Kohärenz.

Ein Benutzer des Systems möchte außerdem den gesamten Speicher als ein "Virtually Shared Memory System" empfinden.

Aus der EP 0587918 A1 ist ein Multiprozessorsystem mit einer sehr großen Anzahl von Prozessoren bekannt, die Cache-Speicher aufweisen und zu Prozessor-Clustern zusammengefaßt sind, die über n parallel angeordnete serielle Hochleistungsbusse miteinander verbunden sind. Weiterhin ist aus diesem Dokument bekannt, daß für einen jeweiligen Prozessor-Cluster eine Anschlußsteuerung vorgesehen ist, die für die n parallel angeordneten seriellen Hochleistungsbusse n Anschlüsse und als eine ihrer Ausführungsfunktionen einen Beobachtungsstatus aufweist, in dem alle Transfers auf allen n parallel angeordneten seriellen Hochleistungsbussen beobachtet und, sofern die in dem jeweils zugehörigen Prozessor-Cluster gehaltenen Cache-Inhalte von den Transfers betroffen sind, Kohärenz unter den zugehörigen Cache-Speichern erhaltende Maßnahmen nach einem Protokoll mit "Snooping" durchgeführt werden.

Aus "Feitosa R Q:" Cache-Kohärenz-Problem bei großen Multiprozessoren für numerische Anwendungen: Ein neuer Lösungsvorschlag "angewandte Informatik, Band 31, Nr. 11/12, 1. November 1989, Seiten 532 - 541" ist es als eine gebräuchliche Maßnahme bekannt, den "Tagteil" (Adreßregisterteil) von Caches zu verdoppeln, um vorteilhafterweise gleichzeitiges Durchsuchen seitens "Snooping" und des Cache-Controller zu ermöglichen.

Aufgabe der Erfindung ist es, ein Multiprozessorsystem mit einigen 10 bis 100 Mikroprozessoren anzugeben, bei denen Cache-Kohärenz ohne Zeitverzug aufrechterhalten werden kann und sich der gesamte Speicher dem Benutzer als ein "Virtually Shared Memory System" darstellt.

Diese Aufgabe wird erfindungsgemäß durch ein Multiprozessorsystem gemäß den Merkmalen des Anspruchs 1 gelöst.

Danach sind jeweils mit mehreren Mikroprozessoren gebildete Prozessor-Cluster über n parallel angeordnete, längenmäßig sehr kurze serielle Hochleistungsbusse miteinander verbunden.

Die einzelnen Mikroprozessoren weisen zum Abspeichern unter anderem von Tags Cache-Speicher auf.

Für die Verbindung der Prozessor-Cluster untereinander ist für einen jeweiligen Prozessor-Cluster eine Anschlußsteuerung vorgesehen, die für die n parallel angeordneten seriellen Hochleistungsbusse n Anschlüsse und ferner einen schnellen Tag-Speicher für die Kopien aller Tags aller Cache-Speicher eines jeweils zugehörigen Prozessor-Clusters aufweist. Außerdem weist die Anschlußsteuerung als eine ihrer Ausführungsfunktionen einen Beobachtungsstatus auf, in dem sie alle Transfers auf allen n parallel angeordneten seriellen Hochleistungsbussen beobachtet und, sofern die in dem jeweils zugehörigen Prozessor-Cluster gehaltenen Cache-Inhalte von den Transfers betroffen sind, Kohärenz unter den zugehörigen Cache-Speichern erhaltende Maßnahmen nach einem Protokoll mit "Snooping" durchführt, wobei es durch die Kombination mit Prozessor-Clustern, in denen jeweils mehrere Mikroprozessoren zusammengefaßt sind, und der Verwendung der übrigen Anordnung, möglich ist, Multiprozessorsysteme aufzubauen, die eine sehr große Anzahl von Mikroprozessoren aufweisen und trotzdem eine sehr hohe Übertragungsrate gewährleisten. Außerdem sind sie in der Lage, dem Benutzer ein "Virtually Shared Memory System" zu vermitteln.

Es gibt mindestens soviele parallel angeordnete serielle Hochleistungsbusse wie Prozessor-Cluster, wobei ein jeweiliger Prozessor-Cluster nur jeweils auf einem der seriellen Hochleistungsbusse eine permanente Sendeerlaubnis hat. Hierdurch wird das Problem der Arbitrierung gelöst, weil eine Konkurrenz auf dem Bus nicht mehr stattfindet.

Sind einem Prozessor-Cluster wenigstens zwei serielle Hochleistungsbusse zugeordnet, kann der betreffende Prozessor-Cluster beispielsweise mehrere Arbeitsspeicherzyklen gleichzeitig durchführen.

In einer weiteren vorteilhaften Ausgestaltung der Erfindung sind die Mikroprozessoren innerhalb eines Prozessor-Clusters über Parallelbusse verbunden. Als Parallelbusse können beispielsweise Busse eingesetzt werden, die unter folgenden Namen bekannt sind: SPbus und Futurebus+.

Durch eine Realisierung der seriellen Hochleistungsbusse als koaxialähnliche Strukturen auf geätzten, flexiblen Baugruppen lassen sich besonders kompakte Bauweisen eines betreffenden Multiprozessorsystems erzielen.

Dem Anschluß eines Prozessor-Clusters an die Vielzahl der seriellen Busse dient eine Anschlußsteuerung pro Prozessor-Cluster, die für n serielle Busse n Anschlüsse aufweist, die in einem schnellen Tag-Speicher eine Kopie aller Tags aller Caches eines zugehörigen Prozessor-Clusters enthält und die alle Transfers auf allen seriellen Bussen beobachtet und, sofern die im Prozessor-Cluster gehaltenen Cacheinhalte betroffen sind, Kohärenz erhaltende Maßnahmen nach einem der bekannten Protokolle mit "Snooping" durchführt.

Ein Multiprozessorsystem mit in der Größenordnung von 100 Mikroprozessoren und mehr und den gewünschten Eigenschaften kann damit aufgebaut werden.

Nachfolgend werden Ausführungsbeispiele der Erfindung anhand einer Zeichnung näher erläutert.

Im einzelnen zeigen in der Zeichnung jeweils in Anlehnung an die Erfindung
- Figur 1: vier, je einen Prozessor-Cluster darstellende Platter in einer Anordnung, die den Anschluß dieser Platter an mehrere, kurze Hochleistungsbusse erlaubt,
- Figur 2: einen Anschluß von vier, je einen Prozessor-Cluster enthaltenden Platter-Funktionseinheiten an n Hochleistungsbusse,
- Figur 3: eine Anordnung von Abschlußwiderständen,
- Figur 4: einen Schrankeinbau für drei Platter-Funktionseinheiten, die jeweils einen Prozessor-Cluster enthalten,
- Figur 5: acht Prozessor-Cluster, die über Anschlußbaugruppen, die zum Platter coplanar angeordnet sind, an die Hochleistungsbusse angeschlossen sind,
- Figur 6: eine coplanare Anschlußbaugruppe, die im gesteckten Zustand an einen Platter angeschlossen ist,
- Figur 7: Anschlußbaugruppen, die bezüglich der Stecker für die Hochleistungsbusse spiegelbildlich ausgebildet sind,
- Figur 8: einen Schrankeinbau für acht Prozessor-Cluster, die über Anschlußbaugruppen, die zum Platter coplanar angeordnet sind, an die Hochleistungsbusse angeschlossenen,
- Figur 9: einen Platter mit zwei coplanaren Steckerpositionen, und
- Figur 10: eine weitere Anordnung für acht Prozessor-Cluster, die über Anschlußbaugruppen, die zum Platter coplanar angeordnet sind, an die Hochleistungsbusse angeschlossen sind.

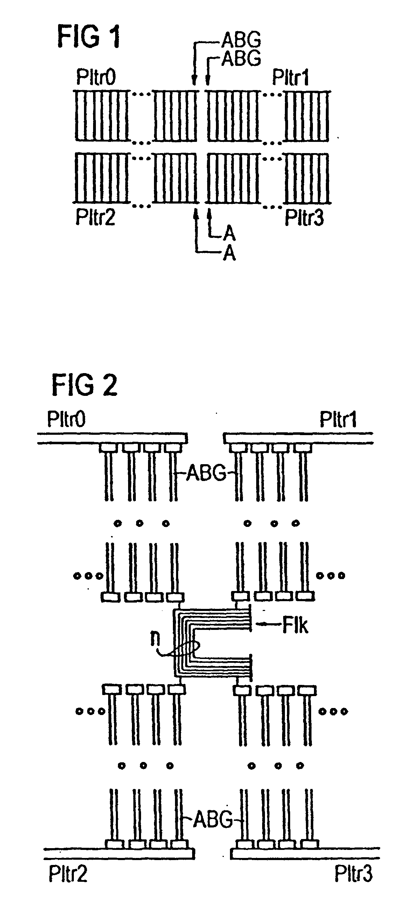

In den Figuren 1 und 2 können vier Prozessor-Cluster über n, nur 10 bis 12 cm lange, serielle Hochleistungsbusse verbunden werden. Die Anzahl n kann dabei aus der Figur 2 ersehen werden. Die Anschlußbaugruppen ABG für n Hochleistungsbusse müssen eine passende Randposition einnehmen. Dabei sind die Anschlußbaugruppen ABG für n Hochleistungsbusse in den Plattern 0 Pltr0 und 3 Pltr3 in den von der Steckerseite her gesehenen am weitesten rechts liegenden Einbauplatzen, bei den Plattern 1 Pltr1 und 2 Pltr2 in den von der Steckerseite her gesehenen am weitesten links liegenden Einbauplatzen gesteckt. Platter 0 Pltr0 und 1 Pltr1, bzw. 2 Pltr2 und 3 Pltr3 sind möglichst nahe nebeneinander plaziert, so daß der Abstand der jeweiligen Anschlußbaugruppen ABG einer üblichen Platterteilung von 0,8 Zoll entspricht. Der Abstand der Frontseiten der Platter 0 Pltr0 und 1 Pltr1 einerseits und 2 Pltr2 und 3 Pltr3 andererseits wird durch den Platz für verwendete Frontstecker der jeweils anderen Baugruppen bestimmt. Wenn frontseitige Baugruppenstecker gezogen oder gesteckt werden, müssen die entsprechenden Platter zuvor, zum Beispiel mit einem Teleskop-Schienen-Mechanismus von einander getrennt werden. Bei diesem Trennvorgang müssen gleichzeitig die Anschlußstecker an die multiplen Hochleistungsbusse getrennt und danach wieder automatisch gesteckt werden. Gleiches gilt auch für das Ziehen und Stecken von Flachbaugruppen. Flk gibt ein Flachkabel für die n Hochleistungsbusse an.

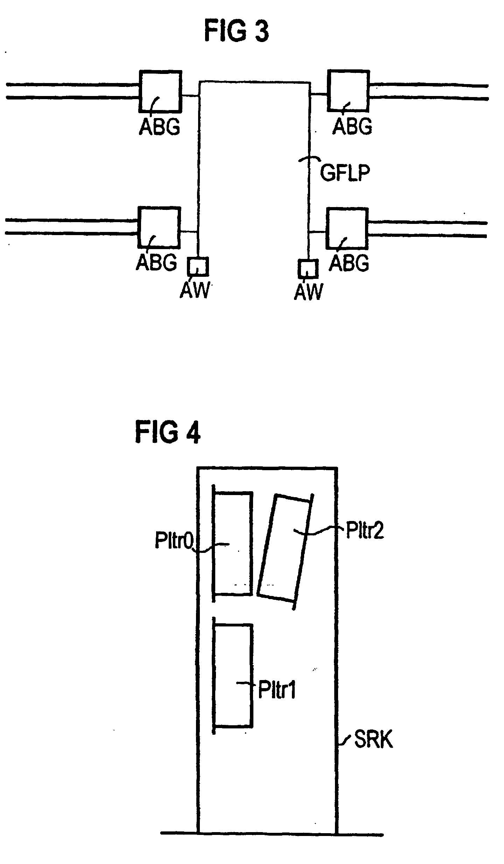

Bei einer Beschränkung auf nur 3 Prozessor-Cluster, werden die oben beschriebenen Schwierigkeiten beim Bedienen der Frontstecker und der Flachbaugruppen vermieden. In Figur 3 ist eine entsprechende Anordnung wiedergegeben. ABG bezeichnet wieder die Anschlußbaugruppen, AW bezeichnen Abschlußwiderstände und GFLP bezeichnet eine geätzte, flexible Leiterplatte zur Aufnahme der Hochleistungsbusse.

Vorteilhaft ist es, den Platter 2 Pltr2 schwenkbar zu halten. Einen möglichen Schrankeinbau zeigt Figur 4. Die Platter 0 Pltr0 und 1 Pltr1 sind fest eingebaut. Der Schwenkbereich kann klein gehalten werden (< 90 Grad). SRK bezeichnet den Schrank.

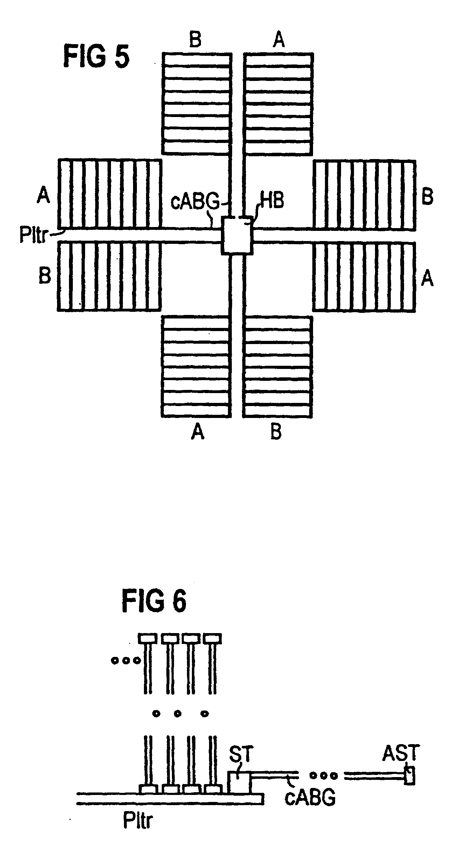

Ein anderer Platteraufbau erlaubt die Kopplung von bis zu 8 Prozessor-Clustern. Dabei wird der Stecker für die Anschlußbaugruppe so vorgesehen, daß die Anschlußbaugruppe coplanar zum jeweiligen Platter Pltr liegt (Figur 5). cABG bezeichnet die coplanaren Anschlußbaugruppen. HB bezeichnet die Hochleistungsbusse.

In Figur 5 sind die mit A bezeichneten Platterfunktionseinheiten in Normallage, die mit B bezeichneten Platterfunktionseinheiten sind hingegen um 180 Grad gedreht, das heißt sie stehen in der Zeichnung in der Draufsicht auf dem Kopf. Um die Hochleistungsbusse gerade durchverbinden zu können, insbesondere wenn es sich wie unten beschrieben, um mehrdrähtige Busse handelt, sind die Busanschluß-Steckerleisten der A-Anschlußbaugruppen spiegelbildlich zu den B-Anschlußbaugruppen. Figur 6 zeigt detailliert die Anordnung der coplanaren Anschlußbaugruppe cABG für den Anschluß an n Hochleistungsbusse. Pltr beschreibt den Platter, ST den Stecker für eine coplanare Anschlußbaugruppe cABG und AST den Anschlußstecker an die Hochleistungsbusse.

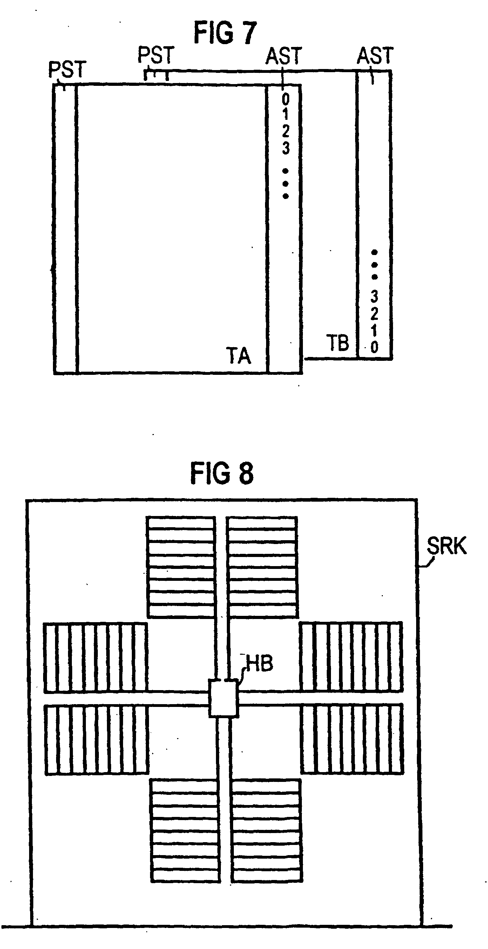

In der Figur 7 sind die zwei gespiegelten Anschlußbaugruppen wiedergegeben, erkennbar an der unterschiedlich verlaufenden Zählrichtung der Steckerpins der Anschlußstecker AST für n Hochleistungsbusse. PST bezeichnet den platterseitigen Stekker, TA eine Anschlußbaugruppe eines ersten Typs und TB eine Anschlußbaugruppe eines zweiten Typs.

Die Figur 8 gibt einen möglichen Schrankeinbau in einen Schrank SRK wieder. Das Ziehen und Stecken der Frontstecker und Flachbaugruppen in dieser Anordnung ist problemlos. HB bezeichnet die Hochleistungsbusse.

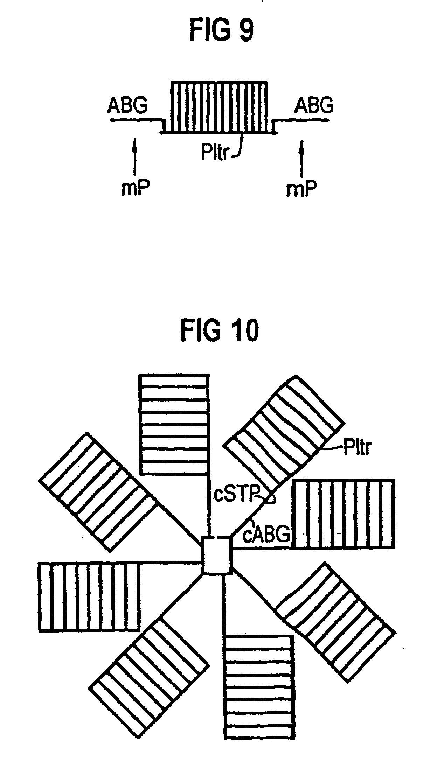

Falls an den, die Prozessor-Cluster beherbergenden Plattern an jeder Seite, also am rechten und am linken Ende, ein Stekker für die coplanare Anschlußbaugruppe vorgesehen wird, kommt man mit einem Typ von Anschlußbaugruppen aus. Bei denen im Kreis aufeinanderfolgenden Platterfunktionseinheiten wird abwechselnd die linke und die rechte Position für die Anschlußbaugruppe benützt. Der Nachteil dieser Anordnung besteht darin, daß die räumliche Ausdehnung einer vollbestückten Platterfunktionseinheit, bei der ein coplanarer Steckplatz für den Einbau einer allgemeinen Baugruppe benutzt wird, größer ist als wenn nur an einer Seite ein Stecker für coplanare Baugruppen angebracht ist. Figur 9 zeigt diesen Sachverhalt. mP bezeichnet die möglichen Positionen für die Anschlußbaugruppe ABG. Wenn eine solche Position durch eine Anschlußbaugruppe besetzt wird, kann die andere für eine andere Anschlußbaugruppe verwendet werden. Das Stecken und Ziehen von Frontsteckern und Flachbaugruppen in dieser Anordnung ist problemlos möglich.

Eine weitere Anordnung von 8 Plattern, von denen nur eine bezeichnet ist, ist in der Figur 10 gezeigt. Diese Anordnung hat den Vorteil, daß nur eine coplanare Steckerposition cSTP an jedem Platter angebracht wird und auch keine spiegelbildliche Vertauschung an der Busanschlußseite der coplanaren Anschlußbaugruppe cABG nötig ist. Alle Platter Pltr haben die gleiche Orientierung. Nicht ganz so günstig ist, daß es beim Ziehen und Stecken der frontseitigen Stecker Schwierigkeiten bei den Einbauplätzen gibt, die nahe am coplanaren Stecker angeordnet sind. Flachbaugruppen mit Frontsteckern, also insbesondere I/O-Baugruppen, sollten deshalb an der dem coplanaren Stecker abgewandten Seite plaziert werden.

Bei einer bevorzugten Ausführungsform sind die einzelnen Platter auf kreisförmig um den Systemmittelpunkt gelegten Schienen beweglich angeordnet. Die Flexibilität der geätzten, flexiblen, die Hochleistungsbusse beherbergenden Flachbaugruppe ermöglicht das Auseinanderschieben von Plattern, wenn weniger als die Maximalzahl, also in diesem Beispiel weniger als 8, Platter im System enthalten sind. Die Platter werden auf den Schienen ähnlich wie Karteikarten in einer Rolodex-Kartei verschoben. In der Kartei werden die Karten auseinandergeschoben, um ihre Inhalte zu lesen, im geschilderten Multiprozessorsystem werden Platter auseinandergeschoben, um Flachbaugruppen und Frontstecker ziehen und stecken zu können. In einem solchen System sind die Frontstecker und Flachbaugruppen leicht zugänglich.

Bei einer anderen bevorzugten Ausführungsform sind die coplanaren Anschlußbaugruppen länger als die normalen Baugruppen. Es können dann mehr als 8 Platter sternförmig um den Systemmittelpunkt gruppiert werden. Eine Verlängerung der Länge um den Faktor 1,74 (=ctg(360/12)) stellt 12 Platter-Plätze, von denen wegen der Zugänglichkeitsprobleme nicht alle besetzt werden, zur Verfügung.

Bei einer weiteren bevorzugten Ausführungsform wird die Anschluß-Steuerung auf zwei, durch Kabel, vorzugsweise Lichtleiter-Kabel, verbundene Baugruppen aufgeteilt. Der eine Teil steckt im jeweiligen Cluster-Platter und enthält im wesentlichen die Systembus-Anschlußsteuerung und den Kabelanschluß für die Verbindung zum anderen Teil. Der zweite Teil enthält im wesentlichen den Speicher für die Kopien der Tags der Caches der im Cluster enthaltenen Mikroprozessoren, die mehrfach vorhandenen Anschlüsse für die Hochleistungsbusse (Autobahnbus-Anschlüsse) und den Kabelanschluß für die Verbindung zum ersten, oben erwähnten Teil. Die Steuerungs-Baugruppen für die Hochleistungsbusse (Autobahn) stecken ihrerseits in einem kurzen, mehrere koaxialkabelähnliche Autobahnbusse enthaltenden Platter. So können mehr als 10 Cluster zu einem Multiprozessorsystem vereinigt werden.

Die Arbitrierung wird dadurch gelöst, daß es mindestens so viele serielle Hochleistungsbusse wie Prozessor-Cluster und für jeweils einen seriellen Hochleistungsbus nur jeweils für einen Prozessor-Cluster permanente Sendeerlaubnis gibt, das heißt, er braucht konkurrierende, senden wollende Zugreifer an diesem Bus nicht zu berücksichtigen, da keine derartigen Konkurrenten existieren. In einer Anordnung nach Figur 1 bzw. 2 können natürlich noch mehr als 4 Leitungspaare für die serielle Hochleistungsbus-Technologie vorgesehen werden.

Bei den heute übliche Plattergrößen und Steckerdichten kann man jedem Prozessor-Cluster mehr als einen seriellen Hochleistungsbus für seine Sendeaktivitäten reservieren. Man hat damit die Möglichkeit pro Prozessor-Cluster mehrere Arbeitsspeicherzyklen gleichzeitig durchzuführen.

## Patentansprüche

1. Multiprozessorsystem mit einer sehr großen Anzahl von Mikroprozessoren, die zum Abspeichern unter anderem von Tags Cache-Speicher aufweisen und zu Prozessor-Clustern zusammengefaßt sind, die für verschiedene Datentransfers über n parallel angeordnete, längenmäßig sehr kurze serielle Hochleistungsbusse miteinander verbunden sind und dazu für einen jeweiligen Prozessor-Cluster eine Anschlußsteuerung vorgesehen ist, die für die n parallel angeordneten seriellen Hochleistungsbusse n Anschlüsse, ferner einen schnellen Tag-Speicher fürdieKopienallerTagsallerCache-Speicher eines jeweils zugehörigen Prozessor-Clusters und als eine ihrer Ausführungsfunktionen einen Beobachtungsstatus aufweist, in dem alle Transfers auf allen n parallel angeordneten seriellen Hochleistungsbussen beobachtet und, sofern die in dem jeweils zugehörigen Prozessor-Cluster gehaltenen Cache-Inhalte von den Transfers betroffen sind, Kohärenz unter den zugehörigen Cache-Speichern erhaltende Maßnahmen nach einem Protokoll mit "Snooping" durchgeführt werden,
**dadurch gekennzeichnet, daß**
mindestens so viele parallel angeordnete serielle Hochleistungsbusse wie Prozessor-Cluster vorgesehen sind und ein jeweiliger Prozessor-Cluster nur jeweils auf einem der seriellen Hochleistungsbusse eine permanente Sendeerlaubnis hat.

2. Anordnung nach Anspruch 1,
**dadurch gekennzeichnet, daß**
für wenigstens einen Prozessor-Cluster wenigstens zwei serielle Hochleistungsbusse vorgesehen sind, für die nur dieser Prozessor-Cluster die permanente Sendeerlaubnis hat.

3. Anordnung nach einem der vorherigen Ansprüche,
**dadurch gekennzeichnet, daß**
die Mikroprozessoren innerhalb eines Prozessor-Cluster über Parallelbusse miteinander verbunden sind.

4. Anordnung nach einem der vorherigen Ansprüche,
**dadurch gekennzeichnet, daß**
die seriellen Hochleistungsbusse als koaxialkabelähnliche Strukturen auf geätzten, flexiblen Baugruppen verwirklicht sind.

## Claims

1. Multiprocessor system having a very large number of microprocessors which have caches for storing tags, inter alia, and are combined to form processor clusters which are connected to one another for various data transfers by means of n serial high-performance buses which are arranged in parallel and are very short in length, and to this end a respective processor cluster is provided with an access controller which has n connections for the n serial high-performance buses arranged in parallel and also a fast tag store for the copies of all the tags in all the caches in a respective associated processor cluster and, as one of its execution functions, an observation status in which all the transfers on all n serial high-performance buses arranged in parallel are observed and, provided that that the cache contents held in the respective associated processor cluster are affected by the transfers, measures which maintain coherence among the associated caches are implemented in accordance with a protocol using "snooping",
**characterized in that**
there are at least as many serial high-performance buses arranged in parallel as there are processor clusters, and a respective processor cluster has permanent transmission authorization only on a respective one of the serial high-performance buses.

2. Arrangement according to Claim 1,
**characterized in that**
at least one processor cluster is provided with at least two serial high-performance buses for which only this processor cluster has permanent transmission authorization.

3. Arrangement according to one of the preceding claims,
**characterized in that**
the microprocessors within a processor cluster are connected to one another by means of parallel buses.

4. Arrangement according to one of the preceding claims,
**characterized in that**
the serial high-performance buses are produced as structures similar to coaxial cables on etched, flexible assemblies.

## Revendications

1. Système à multiprocesseurs comportant un très grand nombre de microprocesseurs qui comportent des antémémoires pour mémoriser entre autres des étiquettes et qui sont rassemblés en des groupes de processeurs , qui, pour divers transferts de données, sont reliés entre eux par n bus série de grande puissance disposés en parallèle, de très courte longueur et pour cela il est prévu pour chaque groupe de processeurs une commande de connexion qui comporte n connexions pour les n bus série de puissance disposés en parallèle, qui comporte en outre une mémoire d'étiquettes rapide pour copier toutes les étiquettes de toutes les antémémoires d'un groupe de processeurs associé et dont une de ses fonctions d'exécution est un état d'observation dans lequel tous les transferts sur les n bus série de puissance disposés en parallèle sont observés et, dans la mesure où le contenu de l'antémémoire de chaque groupe de processeurs est concerné par le transfert, des mesures de maintien de la cohérence entre les antémémoires associées sont réalisées conformément à un protocole avec « snooping »,
**caractérisé en ce qu'**il est prévu au moins autant de bus série de grande puissance disposés en parallèle que de groupes de processeurs et chaque groupe de processeurs n'a une autorisation d'émettre permanente que sur l'un des bus série de grande puissance.

2. Agencement selon la revendication 1, **caractérisé en ce qu'**il est prévu pour au moins un groupe de processeur au moins deux bus série de grande puissance, pour lesquels seul ce groupe de processeurs a l'autorisation d'émettre permanente.

3. Agencement selon l'une des revendications précédentes, **caractérisé en ce que** les microprocesseurs à l'intérieur d'un groupe de processeurs sont reliés entre eux par des bus parallèles.

4. Agencement selon l'une des revendications précédentes, **caractérisé en ce que** les bus série de grande vitesse sont réalisés sous forme de structures similaires à un câble coaxial sur des modules flexibles réalisés par attaque chimique.
